# EUROPEAN PATENT APPLICATION

(11) **EP 4 802 965 A1**
(43) Date of publication of application: **09.09.2026**
(21) Application number: 26162295.5
(22) Date of filing: 04.03.2026
(51) Int. Cl.: A47J 31/00, A47J 31/30, A47J 31/44

(54) **INTEGRATED PORTABLE BEVERAGE PREPARATION DEVICE**

(30) Priority: 05.03.2025 GB 202503190
(71) Applicant: Altibrew Limited, Manchester M20 1HB (GB)
(72) Inventor: HAYTON, Joshua Gerard, Manchester, M20 1HN (GB)
(74) Representative: Houghton, Mark Phillip

(57) **Abstract**

An integrated portable beverage preparation device combining coffee brewing and milk frothing capabilities within a single vessel is disclosed. The device includes an external casing having an interior chamber. The device also includes a removable internal brewing unit configured to be inserted into the external casing, wherein the brewing unit comprises a lower portion having a water inlet tube and a brewing material holder; an upper portion having a beverage outlet tube; and one or more sealing elements disposed on an exterior surface of the upper portion or the lower portion, wherein the sealing elements, when the brewing unit is inserted into the external casing, creates two separate sealed chambers within the external casing. The device further includes a removable milk frothing unit configured to be inserted into the external casing. Figure 3 best illustrates the present invention.

## Description

### FIELD OF THE INVENTION

The present invention relates to portable beverage preparation devices and more particularly relates to an integrated portable beverage preparation device that combines both coffee brewing and milk frothing capabilities within a single vessel.

### BACKGROUND OF THE INVENTION

The preparation of coffee beverages, particularly those requiring both brewing and frothed milk, has conventionally presented significant challenges in portable or outdoor settings. While various portable coffee makers exist in the prior art, these devices typically focus solely on the brewing process, requiring users to either forego frothed milk or carry separate, dedicated milk frothing equipment.

Conventional portable coffee makers primarily utilize pressure-based brewing systems similar to traditional Moka pots, where water is heated in a lower chamber and forced through coffee grounds into an upper collection vessel. However, these systems are limited to coffee brewing functionality alone and do not address the increasing consumer demand for café-style beverages that require both brewed coffee and frothed milk.

Manual milk frothers are separately available and commonly used for creating frothed milk. These devices typically consist of a mesh screen that is manually pushed through milk to create aeration. However, existing portable solutions require users to carry multiple separate devices - one for brewing coffee and another for frothing milk - which increases bulk and complexity while travelling or camping.

Further, existing portable coffee makers do not comprise storage options for convenient transport of their components. Existing designs frequently require multiple vessels or containers that must be packed separately, leading to increased bulk and complexity in transport. Prior art solutions have not successfully addressed the challenge of integrating multiple beverage preparation functions into a single, compact, portable unit.

Current solutions also face challenges in managing pressure and fluid containment within portable brewing systems. While some devices employ basic sealing mechanisms, they lack solutions for creating separate functional chambers within a single vessel. This limitation has prevented the development of multifunctional portable brewing devices.

Existing milk frothing solutions, particularly those designed for portable use, also suffer from efficiency limitations. While various mechanisms exist for creating foam, including spring-loaded closure elements and piston mechanisms as seen in several prior art references, these solutions typically focus on foam generation for coffee rather than efficient milk frothing. Additionally, current portable frothers lack features for optimizing flow patterns and maximizing aeration efficiency.

Some prior art devices have attempted to combine coffee brewing with foam generation capabilities, as evidenced in references describing foam-generating attachments for Moka-style coffee makers. However, these solutions typically focus on creating coffee foam rather than properly frothed milk, and they lack the versatility and portability required for practical outdoor or travel use.

Electronic and automated solutions for milk frothing exist, such as those employing electromechanical whipping mechanisms with sensor-based feedback control. However, these systems are inherently unsuitable for portable applications where power sources may be unavailable, and their complexity makes them impractical for outdoor use.

The limitations of existing solutions have created a need in the market for an integrated, portable beverage preparation system that can effectively combine coffee brewing and milk frothing capabilities while maintaining compactness and ease of use. Such a system would need to solve multiple technical challenges, including: efficient storage and transport of all necessary components; effective pressure management during the brewing process; creation of separate functional chambers within a single vessel; manual milk frothing efficiency without power requirements; component security during pressure-based operations; and system durability for outdoor and travel use.

Additionally, portable equipment is preferably both lightweight and multifunctional, and a number of other beverages, particularly warm beverages they wish to be provided, such as tea or the means of preparing coffee, depending upon the particular type and decide form of the final drink, such as the type of coffee obtainable from a cafetiere.

Further, portable equipment is preferably configured in a compact manner such that maximum use is made of available storage space, whereas many beverage preparation apparatus are deliberately designed so as to not be compact for the purposes of emphasising the functional interaction with the user to enhance the user experience of the beverage making process.

### BRIEF SUMMARY OF THE INVENTION

The present invention, in its various aspects, is as set out in the appended claims.

The present invention provides a compact elongate portable beverage preparation device comprising an external casing, including a lid at an in use upper end to provide a closed container; configured to fit within the casing are:
a) a brewing unit comprising an upper and lower portion defining an internal volume, when join together, for retaining coffee grounds between a coffee screen in the upper portion and a mesh screen in the lower portion; the portions having, attends remote from an end at which the portions join together and outlet tube and an inlet tube, wherein the upper and lower portions when conjoined are sealable at the outer rim at the ends where they can join with the internal wall of the casing so as to divide the casing into upper and lower portions which are hermetically sealed within the container from one another.
In some cases, the supplied lid is configured such that the external casing is sealable by means of the lid, thereby providing a sealed closed container.

The closed container is not airtight so as to enable coffee brewing by heating the container contents, such as when water is placed in the base of the container and on heating forced up the lower brewer unit portion, through coffee placed in the brewing unit into (in an in-use orientation), the upper portion of the casing surrounding the upper portion of the brewing unit. The device in one configuration may enable the lid to seal the container, such that the contents, such as liquids, are kept in the container during transportation to provide greater portability. This enables the device to be transported pre-prepared, ready for later heating of water already present and subsequent transportation after use without spillage of any residual beverage.

In a preferred form of this configuration, the device incorporates a pressure release valve in case a user heats the device when the lid is in the sealed condition.

The present invention may further comprise a drinking vessel (105), the drinking vessel being configured to fit inside the casing and outside the lower portion.

The present invention may be wherein the drinking vessels are identical and configured such that they fit in their respective claimed positions and can be sealed within the casing by means of the lid to provide a hermetically sealed, portable device.

The present invention may further comprise a screen unit, the screen unit being configured to, and an outer rim comprises a froth mesh surface (111) which substantially conforms to the internal dimensions of the casing, the casing being configured to be with substantially parallel walls (such as achieved by means of cylinder), the screen unit further comprising a handle 107 orientated perpendicular to the froth mesh surface 111 and the froth mesh surface being, internally covered at least in part by a screen (113).

In particular, the screen unit may fit, together with the aforementioned other claimed features, within the casing in its closed state by means of the lid.

In the present invention, the screen of the screen unit may comprise an aperture for receiving a tube portion (102) of at least one of the upper and lower portions of the brewing unit, such that the screen unit may be seated here with the brewing unit and be compactly housed within the casing.

In the present invention, the device may further comprise means for sealing said aperture.

In the present invention, the means for sealing said aperture may be in the form of a mesh screen.

The present invention may be configured such that:
a) a first cup is insertable when the casing, subsequently
b) the brewing unit is insertable with the casing, the upper and lower portions of the brewing unit being seatable in at least one of its upper and lower portions within the first cup;
c) a second cup insertable over the other of the at least one of the upper and lower portions of the brewing unit;
such that all three components, a, b, and c fits within the casing in nested form, such that the lid of the casing may be placed upon the device to provide a combined device comprising all three components within the casing.

The present invention may further comprise the aforementioned features such that: d) the screen unit fits between one of the first and second cups and the brewing unit.

The present invention relates to the provision of an integrated portable beverage preparation device that combines both coffee brewing and milk frothing capabilities within a single vessel.

It is a benefit of the present invention to create a space-efficient storage solution wherein all components of the integrated portable beverage preparation device nest compactly within a single external casing.

A feature of the present invention is the use of a sealing mechanism, such as O-rings, that creates separate functional chambers within a single vessel for brewing and collecting coffee.

A further feature of the present invention is to introduce a screen unit, also termed a milk frothing unit, with a storage aperture, preferably centrally located, and folding arms, while enabling compact storage within the portable beverage preparation device.

A further feature of the present invention is that it implements flow optimization features in the screen (milk frothing) unit that improve aeration efficiency during manual operation.

In particular beneficial use of the present invention is to provide a portable system that is compatible with camping stoves or similar heat sources.

A benefit of the present invention is that it improves upon traditional percolation-based coffee brewing by incorporating dual-chamber functionality within a single vessel.

According to the present invention, an integrated portable beverage preparation device combining coffee brewing and milk frothing capabilities within a single vessel is disclosed. The device includes an external casing having an interior chamber. The device also includes a removable internal brewing unit configured to be inserted into the external casing, wherein the brewing unit comprises a lower portion having a water inlet tube and a brewing material holder; an upper portion having a beverage outlet tube; and one or more sealing elements disposed on an exterior surface of the upper portion, wherein the sealing elements, when the brewing unit is inserted into the external casing, creates two separate sealed chambers within the external casing. The device further includes a removable screen (milk frothing) unit configured to be inserted into the external casing.

### BRIEF DESCRIPTION OF DRAWINGS

The present invention will become clearly understood to those of ordinary skill in the art when descriptions of exemplary embodiments thereof are read with reference to the accompanying drawings.
FIG. 1 is an exploded perspective view of an integrated portable beverage preparation device according to the present invention.
FIG. 2 is a perspective view of some of the components of the integrated portable beverage preparation device of Fig. 1
FIG. 3 is a cross-sectional view of the integrated portable beverage preparation device of Fig. 1 in storage condition.
FIG. 4 is a cross-sectional view of the device in the brewing configuration according to the present invention.
FIG. 5 is a cross-sectional view of a milk frothing configuration according to the present invention.

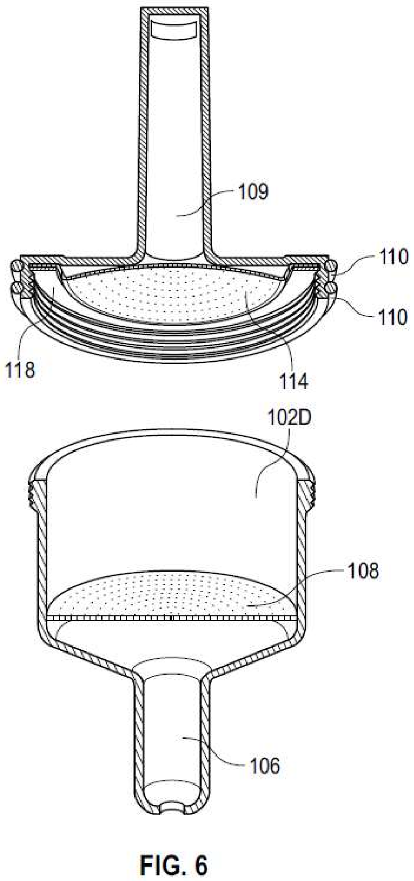

FIG. 6 is a cross-sectional view of the brewing unit of Fig. 4 in a separated configuration.
FIG. 7 is a cross-sectional view of the brewing unit of Fig. 6 when components are screwed together.
FIG. 8 is an exploded perspective view of a brewing unit of Fig. 7.
Fig. 9A is a perspective view of the screen (milk frothing) unit of Fig. 5 in storage mode.
Fig. 9B is a perspective view of the screen (milk frothing) unit of Fig. 5 in operation condition.
Fig. 10 is an exploded perspective view of the screen (milk frothing) unit of Fig. 9B.
Fig.11 is a perspective view of another embodiment of the claimed integrated portable beverage preparation device
Fig.12 is a cross-section showing the integrated portable beverage preparation device of Fig.11 in the storage configuration.
Fig.13 is a cross-section showing the integrated portable beverage preparation device of Fig.11 in the brewing configuration.
Fig.14 is a cross-section showing the integrated portable beverage preparation device of Fig.11 in the frothing configuration.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein. Throughout this specification, when an element is referred to as being "connected to" or "coupled to" another element, it can be directly connected or coupled to the other element, or intervening elements may be present.

In the following detailed description, the "external casing" refers to the primary container that serves multiple functions, including storage, brewing chamber, and frothing chamber. The term "brewing unit" refers to the removable internal component that creates separate chambers within the external casing through sealing elements. The term "frothing unit" refers to the manually operated component with expandable arms and mesh surfaces used for aerating milk. "Sealing elements" refer to O-rings or similar mechanisms that create pressure-tight seals between chambers and components.

The present invention provides a portable beverage preparation device that combines coffee brewing and milk frothing capabilities within a single vessel while maintaining compact storage of all components. The device provides a distinct approach to creating separate functional chambers within the external casing through removable internal components, thereby allowing use of the external casing for both pressure-based coffee brewing and manual milk frothing operations.

In one embodiment, the present invention transforms between different functional modes while maintaining a compact form factor during storage. The transformation is achieved through a plurality of internal components that can nest together within the external casing, facilitated by features such as an aperture, to facilitate compact storage in the casing in the frothing unit and folding arms that can collapse for storage. The aperture is preferably centrally located to allow packing for storage/transport in the casing to be more readily achieved. Further, in some embodiments, the brewing process utilizes pressure generated by heating water in a lower chamber, similar to conventional percolator designs, but incorporates sealing mechanisms that allow for the creation of separate chambers within a single vessel.

The following detailed description will first address the structural components of the invention, followed by their functional relationships and methods of operation. Various embodiments and alternative configurations will be described to fully illustrate the scope of the invention.

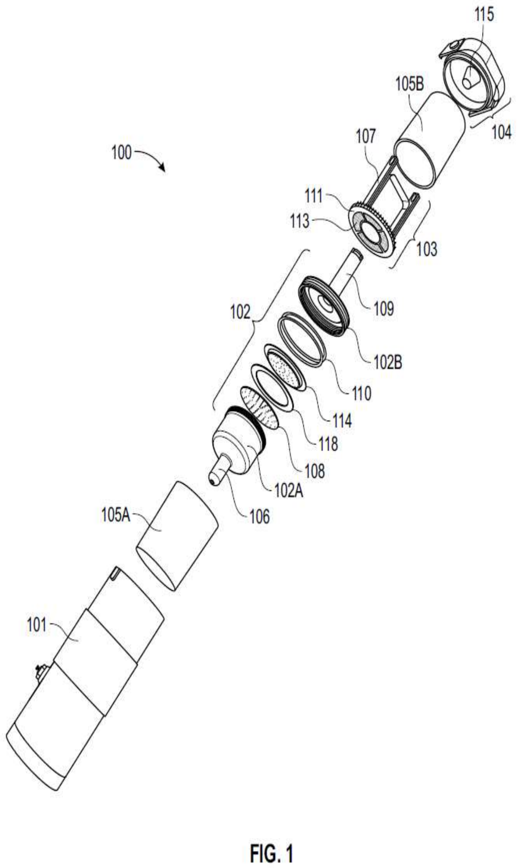

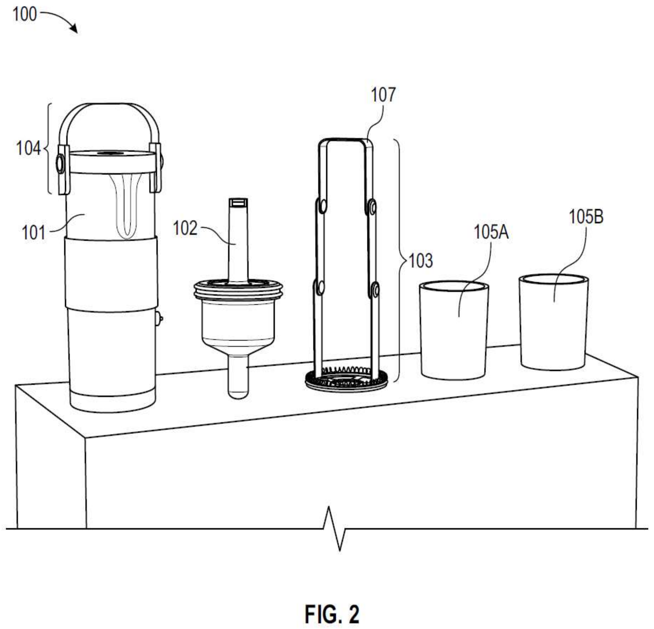

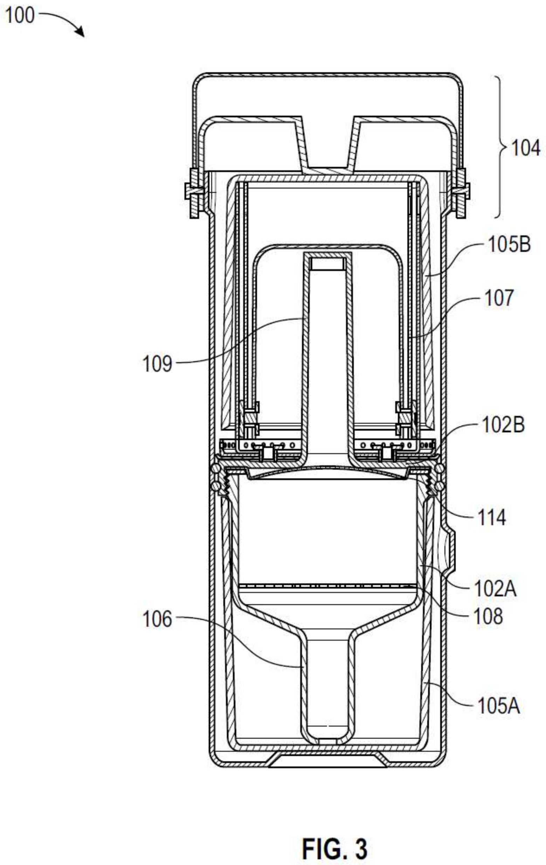

According to the present, an integrated portable beverage preparation device 100 that combines both coffee brewing and milk frothing capabilities is disclosed. The complete components of the device 100 are shown in Fig. 1 and 2. The device 100 comprises an external casing 101, a removable internal brewing unit 102, a removable screen (milk frothing) unit 103 (hereinafter milk frothing unit), a lid 104, and one or more insulated drinking vessels 105A, 105B. Referring to Fig. 3, a cross-sectional view of all the components when arranged inside the casing 101 is depicted.

The external casing 101 forms the primary structure of the invention, which may be constructed from metal or cast metal material suitable for direct heat application. The external casing 101 features internal dimensions calibrated to accommodate the various internal components while maintaining efficient heat transfer capabilities required for both brewing and milk heating operations.

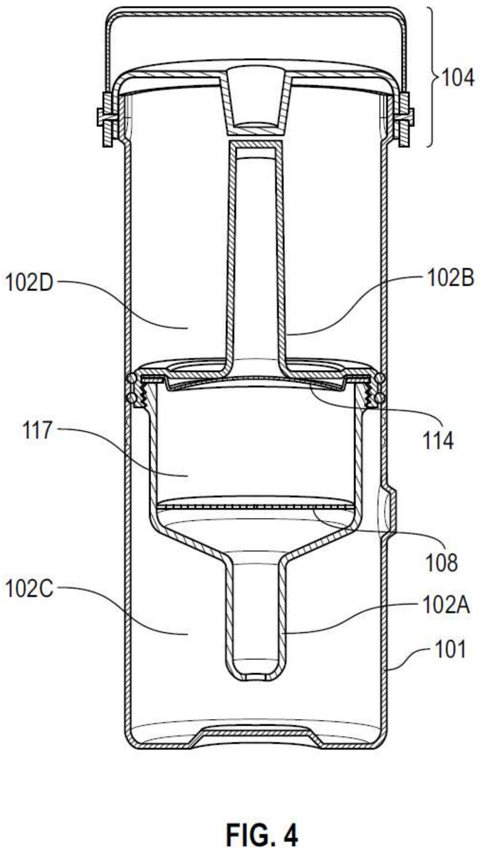

In an exemplary embodiment, the internal brewing unit 102 comprises two main portions: a lower tube portion 102A and an upper tube portion 102B, which work in conjunction to enable pressure-based coffee brewing. A cross-sectional view of the arrangement of the brewing unit 102 inside the casing 101 during the brewing process is depicted in Fig. 4. In one aspect, the lower tube portion 102A of the internal brewing unit 102 includes a water inlet tube 106 extending from a brewing material holder 117, which may incorporate a mesh screen 108 to contain the grounds, also referred to as coffee grounds or brewing material, while allowing water flow. In some embodiments, further, a coffee screen 114 is configured in between the internal seal 118 and the upper portion 102B, whereby the two portions of brewing units 102A and 102B press against the internal seal to further enhance the sealing and water flow control. The coffee screen 114 works in conjunction with the other elements to optimize the brewing process through filtration of brewing materials so that matter does not pass through the outlet tube with brewed liquid, into the collection chamber 102D.

The upper portion 102B includes a coffee outlet tube 109 and is equipped with one or more external sealing elements 110. In specific aspects, the external sealing elements 110 include O-rings 110. In various aspects, the sealing elements 110 may either be integrated with the lower portion 102A or exist as independent components configured to be attached to any portion as needed. It should be noted that the drawing provided is merely an illustrative example and not intended to limit the scope of the invention. The sealing elements 110 are positioned in a way to create separate chambers within the external casing 101 when inserted. In various aspects, the sealing elements 110 are configured to maintain their sealing properties under the pressure and temperature conditions encountered during brewing.

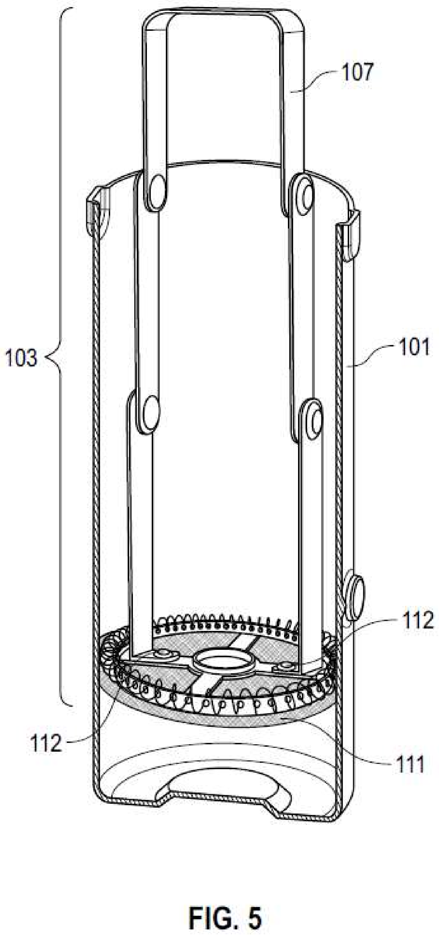

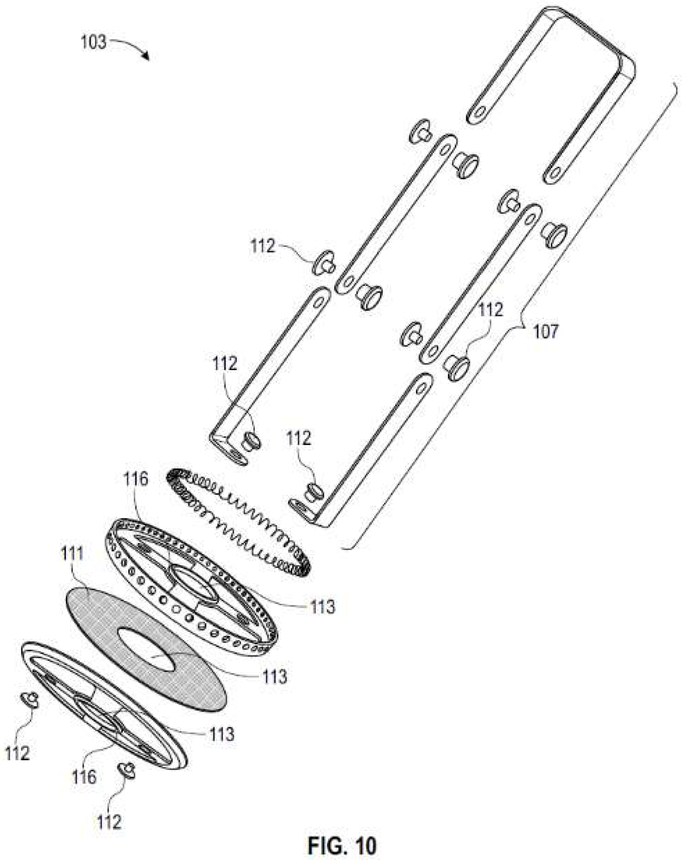

A cross-sectional view of the arrangement of the milk frothing unit 103 inside the casing 101 during the brewing process is depicted in Fig. 5, while an exploded view depicting the complete components of the milk frothing unit 103 is shown in Fig. 10. In an embodiment, the milk frothing unit 103 includes a frothing mesh surface 111 that incorporates flow-directing ridges 116 on both its upper and lower surfaces to optimize milk flow patterns during both upward and downward strokes of the frothing operation. Further, the milk frothing unit 103 includes an aperture 113 (preferably located central on the mesh surface) dimensioned to accommodate storage of the coffee outlet tube 109. The milk frothing unit 103 further includes a plurality of expandable arms that can be folded for storage and extended for operation, with the arms 107 constructed to provide stability during the manual frothing process.

In an embodiment, the brewing configuration of the integrated portable beverage preparation device 100 is discussed. In the brewing configuration, the external casing 101 receives water in its lower section, and then the brewing unit 102 is inserted to create two distinct chambers, such as a lower heating chamber 102C and an upper collection chamber 102D, as shown in Fig. 4. Further, the sealing elements 110 on the exterior surface of the brewing unit 102 engage with the internal wall of the external casing 101, thereby establishing a pressure-tight seal that separates the lower heating chamber 102C from the upper collection chamber 102D.

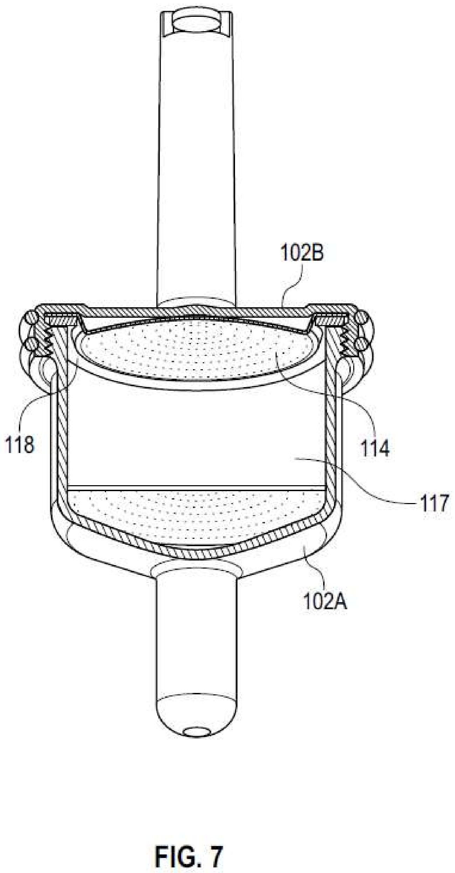

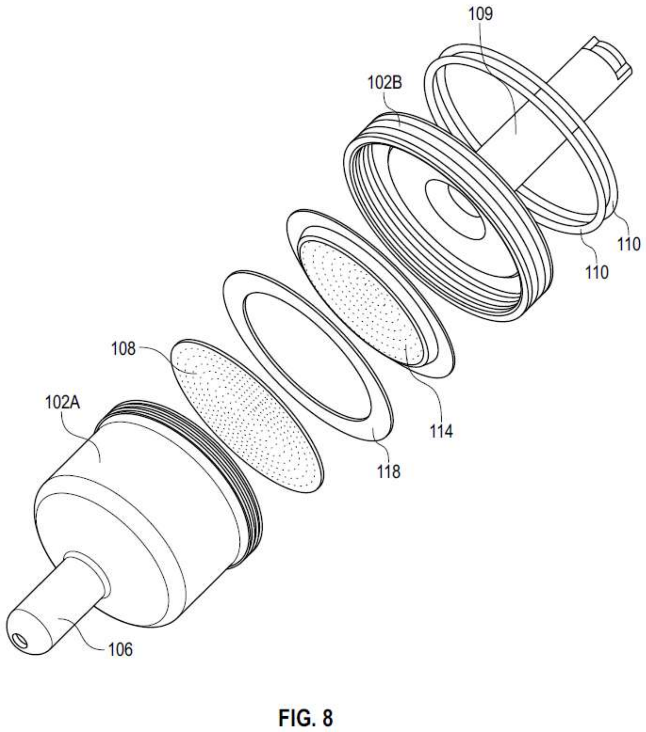

Fig. 7 shows the coffee brewing components screwed together to create the brewing unit 102, while Fig. 8 depicts the exploded view of all the components of the brewing unit 102. When heated, pressure forces water through the inlet tube 106, coffee grounds, and finally through the outlet tube into the upper collection chamber 102D, such that the brewed beverage is collected therein. In one aspect, the sealing elements 110 are positioned accordingly on the upper portion 102B or lower portion 102A such that they create watertight connections between components, thereby ensuring that pressurized water follows the intended flow path. These sealing elements 110 can be placed as needed throughout the assembly to prevent any undesired leakage or bypass, effectively channelling the water from the lower portion 102A, through the coffee brewing unit 102, and out of the upper portion 102B. In one aspect, the lid 104 is configured with an internal protrusion 115 configured to engage with the coffee outlet tube 109 while preventing vertical movement of the device 102 during the pressure-brewing process. In another aspect, the lid 104 is configured as a flat lid without a protrusion to engage with the coffee outlet tube 109 while also preventing vertical movement of the device 102 during the pressure-brewing process.

In another embodiment, the frothing configuration of the integrated portable beverage preparation device 100 is discussed. In the frothing configuration, the device 100 utilizes the external casing 101 after removal of the brewing unit 102. In this embodiment, the frothing unit's arms 107 are extended to their full operational position, and the mesh surface 111 with its integrated flow ridges 116 is positioned for optimal milk aeration. In an exemplary embodiment, the frothing unit's arms 107 are used for the frothing operation. The user is allowed to hold and manually operate the arms 107 by pressing it up and down. The arms 107 are connected together and to the mesh surface 111 using a plurality of attaching elements 112, including but not limited to bolts, nuts, rivets or screws. In some aspects, the aperture 113, preferably cantral, which serves a storage function in the compact configuration, may be covered by a sliding mesh (not shown) or hinged flap (not shown) during frothing operations to maximize efficiency. In the aspect when the aperture 113 of the milk frothing unit 103 is covered using a sliding mesh or hinged flap, the milk flowing through the frothing mesh surface 111 is increased, thereby increasing the frothing efficiency.

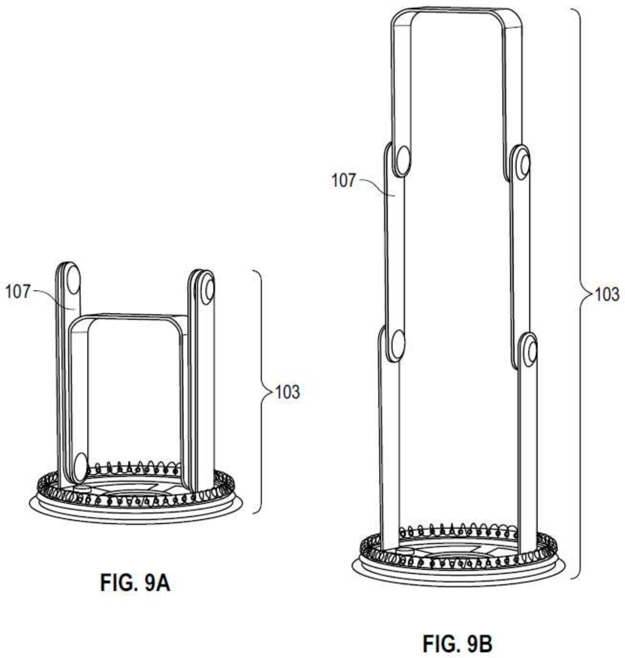

In one embodiment, the storage configuration of the integrated portable beverage preparation device 100 is discussed as shown in Fig. 3. The storage configuration represents that all components nest together within the external casing 101 in a specific sequence. Initially, a first drinking vessel 105A is placed at the bottom of the external casing 101, followed by the brewing unit 102. The milk frothing unit 103, with its arms 107 folded and aperture 113 accommodating the brewing unit's outlet tube 109, nests above these components. Further, a second insulated drinking vessel 105B is configured to be placed on top, with the lid 104 securing all components within the external casing 101. In one aspect, as shown in Fig. 9A and 9B, the frothing unit 103 is depicted in storage configuration (without casing 101) and in operation configuration (without casing 101), respectively.

According to an exemplary embodiment, a method of preparing a beverage using the integrated portable beverage preparation device 100 discussed in previous embodiments is disclosed herein. The method involves the addition of water to the external casing 101 and coffee grounds to the brewing material holder 117 of the brewing unit 102. In the next step, the brewing unit 102 is assembled, i.e. tightly closing the lower portion 102A and upper portion 102B using the sealing elements 118. After assembly of the brewing unit 102, it is inserted into the external casing 101, as shown in Fig. 4, creating the separate chambers: lower heating chamber 102C, upper collection chamber 102D through the sealing elements 110. The external casing 101 is then heated by placing it on a heat source, for instance, a camping stove, thereby generating pressure in the lower heating chamber 102C. The pressure forces water through the inlet tube 106, then coffee grounds, which is placed over the mesh screen 108, and finally through the outlet tube 109 into the upper collection chamber 102D, such that the brewed beverage is collected therein. In one aspect, the sealing elements 110 are positioned accordingly on the upper portion 102B or lower portion 102A such that they create watertight connections between components, thereby ensuring that pressurized water follows the intended flow path. These sealing elements 110 can be placed as needed throughout the assembly to prevent any undesired leakage or bypass, effectively channelling the water from the lower portion 102A, through the coffee brewing unit 102, and out of the upper portion 102B.

In an exemplary aspect, following the brewing phase, the frothing process begins with the removal of the brewing unit 102 and the addition of milk to the external casing 101. Further, the milk is being heated by placing the external casing 101 on the heat source. After heating the milk to the desired temperature, the milk frothing unit 103 is prepared by extending its arms 107. In one aspect, if required, the aperture 113, central or otherwise of the milk frothing unit 103, is covered or configured to be coverable (such as by a rotatable disc). When the aperture is covered, the frothing unit may then be used with the casing to create a cafetiere to provide an alternative and complimentary method of beverage creation. This is particularly useful as it allows the device to also be used for tea and infusion creation. When then, the milk frothing unit 103 is inserted into the external casing 101, as shown in Fig. 5. The frothing operation proceeds through manual up-and-down movement of the milk frothing unit 103, with the flow-directing ridges 116 optimizing milk aeration during both strokes. This configuration allows for efficient frothing without requiring electrical power or complex mechanisms.

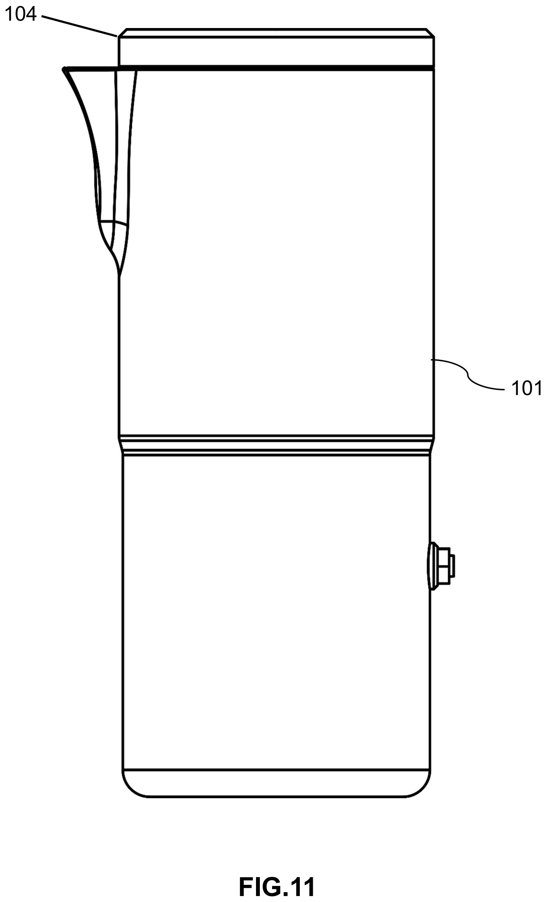

Figures 11 to 14 depict a further embodiment of the present invention, as described above with the addition of an anchoring screw 118. In these embodiments the base of the exterior casing 101 in use comprises a suitable threaded aperture for receiving the anchoring screw, such that the aperture is sealed when the crew is inserted. In use this screw can help provide additional mass to the base of the casing 101 to help re3duce the risk of the device falling over when placed on an uneven surface. After use the user may also remove the screw to help better drain any fluid that may be present within the lower portion of the casing, for improved cleaning.

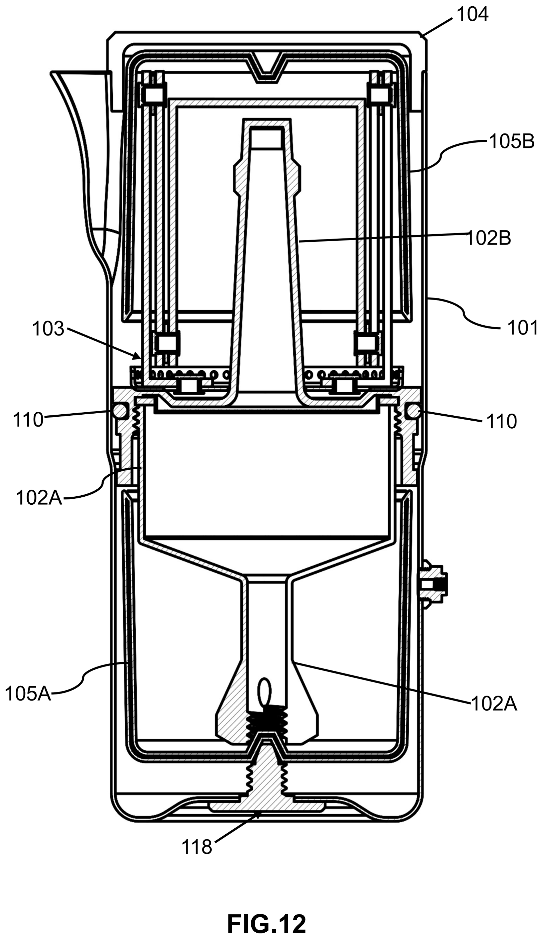

In Fig.12 a cross-section of the device in the storage configuration is shown in this configuration all the component depicted in Fig.2 are stored within the casing 101, including the brewing unit 102, frothing unit 103 and the drinking vessels 105. In this configuration the base of the vessels 105 and the lower portion 102A of the brewing unit 102, comprise an indentation configured to receive the end of the anchoring srew118. When the anchoring screw 118 is inserted in this formation the surface of the screw pushes the components within the lower portion of the casing 101 towards the seal 110 and the components stored in the upper half of the casing 101. This will help to secure all the stored components in place preventing them from moving or rattling when the device is being transported. This can help reduce the amount of wear on the components during transportation and may help prevent damage if the device is impacted.

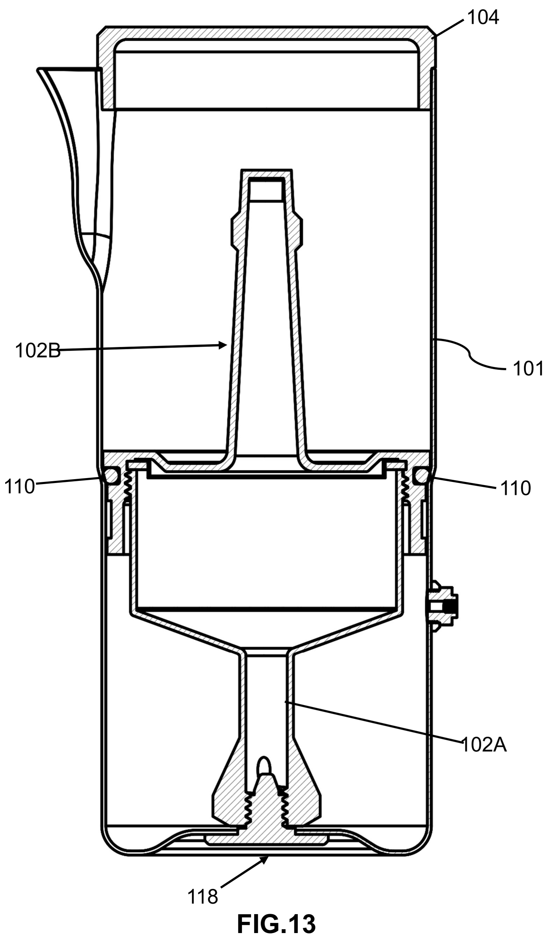

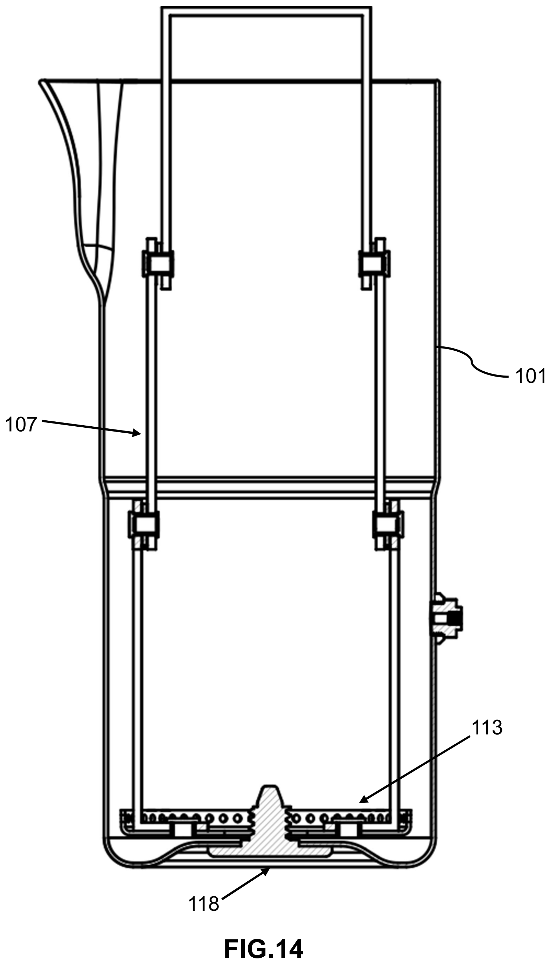

Figures 13 and 14 depict the same embodiment of the device in the brewing configuration and frothing configuration respectively. Please note that in the brewing configuration the tube 106 of the lower portion 102A comprises a indentation for receiving the end of the anchoring screw 118. In these embodiments the aperture for allowing fluid to exit the lower portion 102A is located on the surface of the tube above the indentation to ensure the indentation and the screw 118 does not obstruct the aperture. Similarly, in the frothing configuration, the frothing unit 103 comprises an aperture 113 as described above the aperture being sufficiently large for the inserted portion of the anchoring screw 118 to be inserted through the aperture 113 in use so as to not be obstructed by the screw 118 when in use.

In accordance with another embodiment of the present invention, a beverage preparation system is provided comprising three primary components: an external casing, a brewing unit, and a milk frothing unit. In one aspect, the external casing is constructed from heat-resistant metal or cast metal material suitable for direct heat application, with dimensions configured to accommodate the internal components both during operation and storage, without the need for drinking vessels 105A and 105B.

The brewing unit of this embodiment incorporates a plurality of external sealing elements, for instance, in the form of O-rings, positioned on its outer surface. The sealing elements are designed to create a pressure-tight engagement with the internal walls of the external casing. The brewing unit comprises a lower portion with a water inlet tube extending from a coffee grounds holder, and an upper portion featuring a coffee outlet tube.

In one aspect, the milk frothing unit of this embodiment includes a storage aperture and a plurality of folding arms. The storage aperture is configured to accommodate the coffee outlet tube of the brewing unit during storage configuration. The folding arms are further configured to collapse for storage while extending to full length during frothing operations. In some aspects, the frothing unit includes a mesh surface for milk aeration, with the arms providing stability during manual operation. In the aspect when the aperture of the milk frothing unit is covered using a sliding mesh or hinged flap, the milk flowing through the frothing mesh surface is increased, thereby increasing the frothing efficiency.

In an exemplary aspect, the brewing unit and milk frothing unit are configured to nest together within the external casing during storage, with the aperture of the frothing unit accommodating the outlet tube of the brewing unit, such that this configuration enables compact storage while maintaining full functionality of all components. Hence, if the outlet tube is central, so should the aperture be, so as to receive the outlet tube to facilitate compact storage.

In accordance with another embodiment, the capability of the brewing unit to create separate chambers within the external casing through its external sealing elements is discussed. When inserted into the external casing, the O-rings or similar sealing elements engage with the internal walls to create two distinct chambers: a lower heating chamber and an upper collection chamber. In specific aspects, the dual-chamber configuration enables pressure-based brewing operation while maintaining separation between the heating and collection zones. The sealing elements are engineered to withstand the pressure and temperature conditions encountered during the brewing process while maintaining their sealing integrity.

In accordance with another embodiment, a portable coffee brewing device having a multifunctional external casing and the interchangeability of internal components is discussed. The external casing in this embodiment is configured to function as both a brewing container and a milk frothing container, with internal dimensions and material properties suitable for both operations. In various aspects, the interchangeable internal components in this embodiment comprise the brewing unit and milk frothing unit, each designed for specific functionality while maintaining compatibility with the storage configuration. The brewing unit incorporates external seals that create separate chambers when inserted into the external casing, thereby allowing for pressure-based coffee brewing. The milk frothing unit features various storage configurations, including its aperture and folding arms, and thus enabling compact storage while maintaining full functionality.

This embodiment emphasizes the storage efficiency of the system, with the internal components configured to nest together within the external casing. The nesting configuration is achieved through appropriate dimensional relationships between components, and thus allowing for secure and compact storage while ensuring each component remains readily accessible for use. In one aspect, the external casing in this embodiment serves multiple functions: acting as a storage container during transport, a brewing vessel during coffee preparation, and a frothing container during milk preparation. The transition between these functions is achieved without requiring additional components or modifications, emphasizing the versatility and efficiency of the device.

The present invention accommodates various alternative embodiments, including the apparatus without integrated drinking vessels for users who prefer to use their own containers. In such configurations, the storage arrangement can be modified while maintaining the core functionality of the brewing and frothing systems. Additional variations may include different mechanisms for securing the brewing unit during pressure operations, alternative materials for thermal efficiency, and various designs for the aperture-covering mechanism on the frothing unit.

The sealing elements may be implemented through various means besides O-rings, provided they achieve the necessary pressure-tight separation of chambers. Similarly, the flow-directing ridges on the frothing unit may be arranged in different patterns to optimize milk flow and aeration based on specific usage requirements.

It will finally be understood that the disclosed embodiments are presently preferred examples of how to make and use the claimed invention, and are intended to be explanatory rather than limiting the scope of the invention as defined by the claims below. Reasonable variations and modifications of the illustrated examples in the foregoing written specification and drawings are possible without departing from the scope of the invention as defined in the claim below. It should further be understood that to the extent the term "invention" is used in the written specification, it is not to be construed as a limited term as to the number of claimed or disclosed inventions or the scope of any such invention, but as a term which has long been conveniently and widely used to describe new and useful improvements in technology. The scope of the invention supported by the above disclosure should accordingly be construed within the scope of what it teaches and suggests to those skilled in the art, and within the scope of any claims that the above disclosure supports. The scope of the invention is accordingly defined by the following claims.

This application is intended to cover any adaptations or variations of the present invention. Therefore, it is manifestly intended that this invention be limited only by the claims and the equivalents thereof.

In the present invention, the terms upper and lower are relative terms used for convenience and refer to an in-use orientation of the device, such as shown in the figures, with the lid at the top and the casing below. The device in other orientations should be considered as if it were in the in-use configuration when construing the terms of the description and claims.
The following numbered sentences further describe the present invention in its various aspects:
1. An integrated portable beverage preparation device comprising:
   an external casing having an interior chamber;
   a removable internal brewing unit configured to be inserted into the external casing, the brewing unit comprising:
      a lower portion having a water inlet tube and a brewing material holder;
      an upper portion having a beverage outlet tube; and
      one or more sealing elements configured to be disposed on an exterior surface of the upper portion or the lower portion;
         wherein the sealing elements, when the brewing unit is inserted into the external casing, creates two separate sealed chambers within the external casing; and
   a removable milk frothing unit configured to be inserted into the external casing.
2. The device of numbered sentence 1, wherein the two separate sealed chambers include a lower heating chamber and an upper collection chamber.
3. The device of numbered sentence 1, wherein the removable milk frothing unit comprises:
   a frothing mesh surface;
   an aperture configured between the frothing mesh surface to accommodate storage of the brewing unit; and
   a plurality of expandable arms, surrounding the frothing mesh surface, that fold for storage and extend for operation.
4. The device of numbered sentence 3, wherein the milk frothing unit further comprises flow directing ridges positioned on upper and lower surfaces of the frothing mesh, wherein the ridges are configured to direct liquid flow from the aperture toward the frothing mesh surface during both upward and downward movement of the milk frothing unit.
5. The device of numbered sentence 1, further comprising a lid configured to be secured to and thereby enclose the internal value of the external casing.
6. The device of numbered sentence 5, wherein the lid is configured to engage with the beverage outlet tube of the brewing unit to prevent vertical movement during operation.
7. The device of numbered sentence 1, wherein the sealing elements comprise one or more O-rings;
   wherein the O-rings are configured to:
   create a pressure-tight seal between the lower heating chamber and upper collection chamber; and
   provide sufficient friction against the external casing to prevent movement under pressure.
8. The device of numbered sentence 3, wherein the milk frothing unit further comprises a selective aperture covering mechanism selected from a sliding mesh cover and a hinged flap, wherein the covering mechanism is configured to cover the aperture during frothing operation, such that the milk flowing through the mesh surface is increased, thereby increasing the frothing efficiency.
9. The device of numbered sentence 1, further comprising one or more insulated drinking vessels configured to nest within the external casing, wherein the drinking vessels are sized to accommodate storage of at least one of the brewing unit and the milk frothing unit between them when nested.
10. The device of any of claims 3 to 9, wherein the aperture in the frothing unit is centrally located.
11. A method of preparing a beverage using the device of numbered sentence 1, comprising:
   filling the external casing with water and coffee grounds to a brewing material holder;
   inserting the brewing unit to create the separate chambers;
   applying heat to the external casing to generate pressure in the lower chamber;
   collecting brewed beverage in the upper chamber;
   removing the brewing unit;
   adding milk to the external casing;
   heating the milk;
   inserting the milk frothing unit; and
   manually actuating the milk frothing unit to create frothed milk.
12. A beverage preparation system comprising:
   an external casing;
   a brewing unit with a plurality of external sealing elements; and
   a milk frothing unit with a storage aperture and folding arms;
      wherein the brewing unit and milk frothing unit are configured to nest together within the external casing during storage; and
      wherein the external casing serves as both a brewing chamber and a frothing chamber when used with respective units.
13. The system of numbered sentence 11, wherein the brewing unit creates separate chambers within the external casing through external sealing elements.
14. A portable coffee brewing device comprising:
   an external casing configured to function as both a brewing container and a milk frothing container; and
   interchangeable internal components comprising:
      a brewing unit that creates separate chambers through one or more external sealing elements; and
      a milk frothing unit with storage configurations;
      wherein the internal components are configured to nest together within the external casing during storage.

## Claims

1. A compact elongate portable beverage preparation device (100) comprising an external casing (101), provided with a lid (104) at an in use upper end; configured to fit within the casing are:
a) a brewing unit comprising an upper (109) and lower (106) portion defining an internal volume when join together, for retaining coffee grounds between a coffee screen (114) in the upper portion and a mesh screen (108) in the lower portion; the portions having, respectively at ends remote from an end at which the portions join together an outlet tube (102B) and an inlet tube (102A);
wherein the upper and lower portions when conjoined are sealable at the outer rim at the ends where they conjoin with the internal wall of the casing so as to divide the casing into upper and lower portions which are hermetically sealed from one another within the container.

2. The device of claim 1, wherein the external casing (101), is sealable by means of the lid (104) at the in use upper end to provide a sealed container.

3. The device of claim 1 or claim 2, wherein the upper (109) and lower (106) portions are joined together by means of a seal and secured by means of a coupling, the coupling preferably being selected from a screw thread or a bayonet coupling.

4. The device of claim 1, wherein the end of the lower portion (106) at its end remote from the join the upper portion (109), and adjacent to the inlet tube (102A) is terminated in a coupling for coupling to a corresponding coupling in the external casing, the coupling preferably being selected from a screw thread or a bayonet coupling.

5. The device of claim 4, were in the corresponding coupling in the external casing (101) is provided by means of a plug insertable through an aperture in the base of the external casing (101) and releasable from said aperture upon a pressure being developed within the external casing (101) above a predetermined level for the creation of a safety valve such that excess pressure is thereby released.

6. The device of claim 1, wherein the end of the lower portion (106) at its end remote from the join the upper portion (109), and adjacent to any coupling; provides the inlet tube in the form of a manifold extending tubes from a level adjacent the inner base of the container (101) to an inside of the lower portion where the tube converge as a single inlet tube.

7. The device of claim 1, further comprising a drinking vessel (105) the drinking vessel being configured to fit inside the casing and outside the lower portion.

8. The device of claim 1, further comprising a further drinking vessel (105) the drinking vessel being configured to fit inside the casing and outside the upper portion and wherein when the drinking vessels is a further drinking vessel, the drinking vessels are identical.

9. The device of claim 1, further comprising a screen unit, the screen unit being configured to, and an outer rim comprising a froth mesh surface (111) which substantially conforms to the internal dimensions of the casing, the casing being configured to be with substantially parallel walls (such as achieved by means of cylinder) , the screen unit further comprising a handle 107 orientated perpendicular to the froth mesh surface 111 and the froth mesh surface being, internally covered at least in part by a screen (113).

10. The device of claim 7, wherein the screen unit fits, together with the aforementioned other claimed features within the casing in its closed state by means of the lid.

11. The device of claim 8, wherein the screen of the screen unit comprises an aperture for receiving a tube portion (102) of at least one of the upper and lower portions of the brewing unit such that the screen unit may be seated within the brewing unit and be compactly housed within the casing.

12. The device of claim 9, wherein the device further comprises means for sealing said aperture.

13. The device of claim 1, wherein the lower portion (106) is when inserted into the external casing (101) sealed at its outer edge to the casing by means of an O-ring seal and the upper portion is sealed to the lower portion by means of a gasket.

14. The device of claim 1, wherein the device is configured to be presented in a closed, transportation, format and an open, use format, wherein:
in the closed format all of the components of the device and specifically the upper (106) and lower (109) portions together with a screen unit and drinking vessels (105) are located within the external casing (101) and closed, preferably hermetically sealed, by means of of the lid (104) and
in the use format, upper (106) and lower (109) portions are connected together, the lower portion is sealed adjacent its upper edge to the inner wall of the external casing (101) and the lower portion is connected at its base to the inside of the base of the external casing (101) so as to form an enclosed volume capable of withstanding a pressure above atmospheric pressure with the external casing (101) closed at its upper end by means of the lid (104) in a non-hermetically sealed configuration.

15. The device of any preceding claims in which:
a) a first drinking vessel is insertable when the casing, subsequently
b) the brewing unit is insertable with the casing, the upper and lower portions of the brewing unit being seatable in at least one of its upper and lower portions within the first drinking vessel;
c) a second drinking vessel insertable over the other of the at least one of the upper and lower portions of the brewing unit;
such that all three components a, b, c fits within the casing in nested form such that the lid of the casing may be placed upon the device to provide a combined device comprising all three components within the casing and optionally wherein
d) a screen unit fits between one of the first and second drinking vessels and the brewing unit.
